# EUROPEAN PATENT SPECIFICATION

(11) **EP 2 068 496 B1**
(45) Date of publication and mention of the grant of the patent: **27.05.2015**
(21) Application number: 07800961.0
(22) Date of filing: 15.08.2007
(51) Int. Cl.: H04L 12/24

(54) **METHOD AND SYSTEM FOR MANAGING OBJECT INSTANCES**
VERFAHREN UND SYSTEM ZUR VERWALTUNG VON OBJEKTINSTANZEN
PROCÉDÉ ET SYSTÈME DESTINÉS À GÉRER DES INSTANCES D'OBJETS

(30) Priority: 15.08.2006 CN 200610112147
(43) Date of publication of application: 10.06.2009
(60) Divisional application: 14195037.8
(73) Proprietor: Huawei Technologies Co., Ltd., Longgang District Shenzhen, Guangdong 518129 (CN)
(72) Inventor: WANG, Dongqi, Shenzhen, Guangdong 518129 (CN)
(74) Representative: Kreuz, Georg Maria
(86) International application number: PCT/CN2007/070485
(87) International publication number: WO 2008/022590

(56) References cited:
- EP-A- 1 686 725
- CN-A- 1 458 761
- CN-A- 1 705 279
- US-A1- 2006 117 323
- US-B1- 6 694 304
- ITU-T: "CORBA-based TMN services: Extensions to support coarse-grained interfaces" ITU-T RECOMMENDATION Q.816.1, XX, XX, 1 August 2001 (2001-08-01), page COMPLETE, XP002371559
- "TMN GUIDELINES FOR DEFINING COARSE-GRAINED CORBA MANAGED OBJECT INTERFACES" ITU-T RECOMMENDATIONS, INTERNATIONAL TELECOMMENDATION UNION, GENEVA, CH, vol. X.780.01, 1 August 2001 (2001-08-01), page COMPLETE, XP007900206 ISSN: 1680-3329
- "Information technology - Open Systems Interconnection - Structure of management information: Management information model; X.720 (01/92)", ITU-T STANDARD IN FORCE (I), INTERNATIONAL TELECOMMUNICATION UNION, GENEVA, CH, no. X.720 (01/92), 17 January 1992 (1992-01-17), XP017404143,
- Joon-Heup Kwon ET AL: "Design and Implementation of CORBA-Based Integrated Network Management System" In: "Networking - ICN 2001", 1 January 2001 (2001-01-01), Springer Berlin Heidelberg, Berlin, Heidelberg, XP055091955, ISBN: 978-3-54-042303-4 vol. 2094, pages 409-421, DOI: 10.1007/3-540-47734-9_41,

## Description

### Field of the Invention

The present invention relates to network communications, and in particular, to a method, apparatus and system for managing object instances.

### Background of the Invention

With the development of network technologies and increase of network applications, networks become more and more complex and raise higher requirements for network device management. Devices being managed are scattered on a network due to network complexity. To manage these scattered devices being managed, a network device management system must be used.

The Digital Subscriber Line (DSL) Forum is a standardization organization. It formulates related standards for automatically configuring Customer Premises Equipment (CPE) and providing management functions remotely.

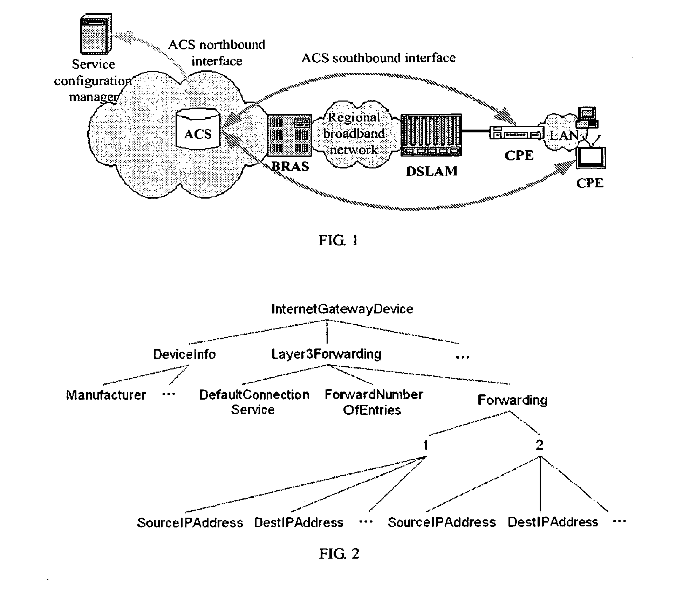

FIG. 1 shows an automatic configuration and management model defined by the DSL Forum. As shown in FIG. 1, the IP equipment in a family or an enterprise is called a CPE, and the CPE can be configured automatically and remotely by an Auto-Configuration Server (ACS) without user's participation.

The DSL Forum defines different data models for different types of CPE, for example, Set-Top Box (STB), Home Gateway (HGW), and Voice over IP (VoIP) phone. The data model is a set of CPE parameters.

TR-069 is a DSL Forum standard in the conventional art. TR-069 describes the basic information of a CPE in a tree structure. FIG. 2 shows a structure of an HGW data model 1.0 defined in TR-069. The following describes the data model shown in FIG. 2 in detail.

As shown in FIG. 2, the InternetGatewayDevice is a root node, which includes many intermediate nodes and parameters, for example DeviceInfo and Layer3Forwarding. These two intermediate nodes also include many intermediate nodes or parameters. For example, the DeviceInfo node includes a Manufacturer parameter; the Layser3Forwarding node includes two instances of Forwarding besides DefaultConnectionService and ForwardNumberOfEntries. The CPE allocates instance 1 and instance 2 to the two instances of Forwarding (The instance number in TR-069 is represented by an integer.).

In TR069, the Forwarding node in Layer3Forwarding is an object, and Forwarding.1 and Forwarding.2 are two instances of the Forwarding object, which are differentiated by the instance numbers when being accessed.

TR069 identifies a parameter or an intermediate node by a path in accordance with the parameter or node, where the path is from the root to the parameter or node. Some examples are given as follows.

1. To access a common parameter, the names of all the nodes (including the parameter) from the root to the level where the parameter is located, which are partitioned by a dot in the middle to form the path, need to be connected.

Taking the Manufacturer parameter in DeviceInfo as an example, the path for accessing the parameter is InternetGatewayDevice.DeviceInfo.Mananufacturer.

2. To access a parameter of a dynamic instance of an object, the user needs to add an instance number to a node of the dynamic instance as a suffix and a dot is used for partition to form a path.

For example, the path for accessing a SourceIPAddress parameter of instance 1 of instance InternetGatewayDevice.Layer3Forwarding.Forwarding is as follows:
InternetGatewayDevice.Layer3Forwarding.Forwarding.1.SourceIPAddress

For example, the path for accessing a SourceIPAddress parameter of instance 2 of instance InternetGatewayDevice.Layer3Forwarding.Forwarding is as follows:
InternetGatewayDevice.Layer3Forwarding.Forwarding.2.SourceIPAddress

A Remote Procedure Call Protocol (RPC) method of AddObject and DeleteObject provided by TR-069 are used to add or delete a dynamic instance.

For example, to add an instance to the InternetGatewayDevice.Layer3Forwarding.Forwarding object in the CPE data model shown in FIG. 2, the ObjectName parameter may be set to "InternetGatewayDevice.Layer3Forwarding.Forwarding." when calling the RPC method of AddObject, that is, an instance of the object is generated. The allocation of an instance number depends on the CPE.

To delete an instance of an object, an instance number needs to be added after the object name. For example, to delete the InternetGatewayDevice.Layer3Forwarding.Forwarding.2 instance, the ObjectName parameter may be set to "InternetGatewayDevice.Layer3Forwarding.Forwarding.2." when calling the RPC method of DeleteObject, that is, the instance with instance number 2 of the object is deleted.

During the implementation of the present invention, the inventor finds that the method for managing object instances in the conventional art has the following weaknesses.

For example, when the ACS needs to call the AddObject RPC method of two different CPEs to create instances of the InternetGatewayDevice.Layer3Forwarding.Forwarding object, two CPEs may return different instance numbers for a same object instance because the instance numbers are allocated by two different CPEs. For example, one CPE may return an instance number of 1, while the other CPE may return an instance number of 2. Instances created by different CPEs are as follows:
InternetGatewayDevice.Layer3Forwarding.Forwarding.1
InternetGatewayDevice.Layer3Forwarding.Forwarding.2

Thus, when there is a need to configure a same object instance of multiple CPEs through TR-069, TR-069 is required to access each CPE for configuring the object instance in turn because the instance ID of a same object instance is inconsistent in different CPEs; that is, each CPE returns different instance IDs (instance numbers), which makes the configuration process complex.

### Summary of the Invention

Embodiments of the present invention provide a method, apparatus and system for managing object instances to configure or access object instances of devices being managed in batches.

Embodiments of the present invention are implemented through the following technical solution:

A system for managing object instances defined in the Digital Subscriber Line, DSL, Forum includes:
a management device, adapted to allocate an index ID to each object instance which needs being managed, wherein the index IDs are associated with the object instances on a one-to-one basis, obtain index ID of an object instance in a device being managed and to carry the index ID in a related message of the object instance associated with the index ID, wherein the related message is sent to different devices being managed; and
the device being managed of the different devices being managed, adapted to store a corresponding relation created by the device being managed of the different devices being managed between an instance ID of the object instance and the index ID, to obtain the instance ID associated with the index ID carried in the related message according to the stored corresponding relation after receiving the related message sent from the management device, and to perform related operations on the object instance according to instructions carried in the related message.

A method for managing object instances defined in the Digital Subscriber Line, DSL, Forum includes:
allocating, by a management device, an index ID to each object instance which needs being managed, wherein the index IDs are associated with the object instances on a one-to-one basis;
obtaining, by the management device, index ID of an object instance in a device being managed; and
applying, by the management device, the index ID in a related message of the object instance associated with the index ID,
sending, by the management device, the related message to different devices being managed;
storing and managing a corresponding relation created by the device being managed of the different devices being managed which is between an instance ID of the object instance and the index ID in the device being managed of the different devices being managed;
after receiving the related message, by the device being managed of the different devices being managed, obtaining the instance ID associated with the index ID carried in the related message according to the stored corresponding relation, and
performing related operations on the object instance according to instructions carried in the related message.

According to the technical solution provided in the present invention, embodiments of the present invention differentiate object instances by using index IDs in a network management device (for example, ACS), and maintain the corresponding relation between the object instances and the index IDs in a device being managed (for example, CPE). Thus, the object instances in devices being managed (for example, CPE) may be configured or accessed in batches by using a unified command. This overcomes the weakness of the conventional art in which devices being managed (for example, CPE) must be configured in turn due to inconsistency of the instance ID of a same object instance in different devices being managed (for example, CPE)

### Brief Description of the Drawings

FIG. 1 shows a schematic diagram of an automatic configuration and management model defined by the DSL Forum;
FIG. 2 shows a schematic diagram of a structure of an HGW data model defined in TR-09 in the conventional art;
FIG. 3 shows a schematic diagram of a structure of an ACS according to an embodiment of the present invention;
FIG. 4 shows a schematic diagram of a structure of a CPE according to an embodiment of the present invention;
FIG. 5 is a flowchart of a method according to an embodiment of the present invention;
FIG. 6 shows a schematic diagram of a structure of a CPE data model according to an embodiment of the present invention; and
FIG. 7 shows a schematic diagram of a structure of a corresponding relation table between object instances maintained in each CPE and index IDs according to an embodiment of the present invention.

### Detailed Description of the Embodiments

Embodiments of the present invention provide a method, apparatus and system for managing object instances. Embodiments of the present invention use index IDs in a network management device (for example, ACS) to differentiate different object instances, carry corresponding index IDs in related messages of various object instances that the management device sends to a device being managed (for example, CPE), and maintain the corresponding relation between instance IDs of object instances and index IDs in the device being managed.

Embodiments of the present invention are hereinafter described in detail with reference to the accompanying drawings. The method, apparatus and system provided in embodiments of the present invention are applicable to the remote management of dynamic instances defined in related standards (for example, TR-069) of the DSL Forum. Taking TR-069 as an example, the apparatuses provided in an embodiment of the present invention include a management device and a device being managed.

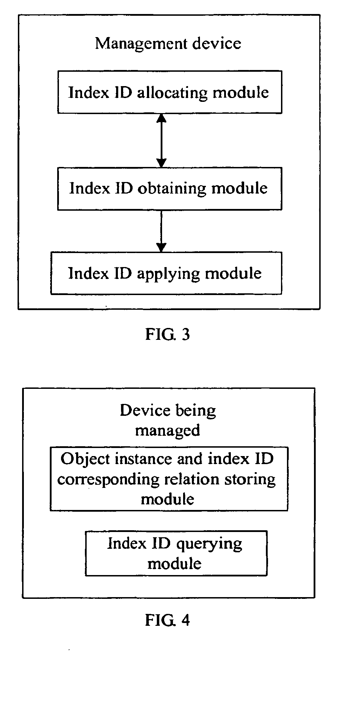

FIG. 3 shows a structure of the management device provided in an embodiment of the present invention. The management device includes an index ID allocating module, an index ID obtaining module, and an index ID applying module.

The index ID allocating module is adapted to allocate a corresponding index ID to each object instance managed by the management device, and to send the corresponding relation between the allocated index IDs and the object instances to the index ID obtaining module. In practical applications, the index ID may be customized by a manufacturer or uniformly specified by a standardization organization. The corresponding relation between index IDs and object instances may also be stored in other background devices. Thus, the index ID allocating module is optional.

The index ID obtaining module is adapted to obtain index ID information of object instances. The management device indexes object instances in devices being managed which are managed by the management device according to the index ID information. In the DSL Forum, the preceding management device is an ACS. In practical applications, the management device may obtain the index ID information by querying the index ID allocating module or a background device that stores the corresponding relation between index IDs and object instances.

The index ID applying module is adapted to carry the related index ID information of an object instance obtained by the index ID obtaining module in related messages of the object instance that the management device sends to the device being managed (for example, CPE). The related messages include messages associated with the AddObject method (for adding an object instance), DeleteObject method (for deleting an object instance), GetParameterValues method (for obtaining information of one or multiple parameters of an object instance, GetParameterNames method (for obtaining the name of one or multiple parameters of an object instance), and SetParameterValues method (for setting information of one or multiple parameters of an object instance).

FIG. 4 shows a structure of the device being managed provided in an embodiment of the present invention. The device being managed includes an object instance and index ID corresponding relation storing module and an index ID querying module.

The object instance and index ID corresponding relation storing module is adapted to store the corresponding relation created by the device being managed (for example, CPE) between index IDs and instance IDs of each object instance in a form such as an corresponding relation table, where the corresponding relation table may include two columns: one column corresponds to index IDs and the other column gives instance IDs of object instances associated with the index IDs.

The index ID querying module is adapted to obtain index ID information carried in a related message after receiving the related message of an object instance carrying an index ID from the management device, query the object instance and index ID corresponding relation storing module for the corresponding relation information according to the index ID information, and obtain object instance information associated with the index ID.

The system for managing object instances in an embodiment of the present invention includes a management device and a device being managed.

The management device is adapted to obtain index ID information of an object instance in a device being managed by the management device; and to carry the index ID information in a related message of the object instance associated with the index ID, where the related message is sent to the device being managed.

The device being managed is adapted to store a corresponding relation created by the device being managed between the instance ID of the object instance and the index ID; to obtain the object instance information that is associated with the index ID information carried in the related message according to the stored corresponding relation after receiving the related message from the management device; and to perform related operations on the object instance according to the contents of the related message.

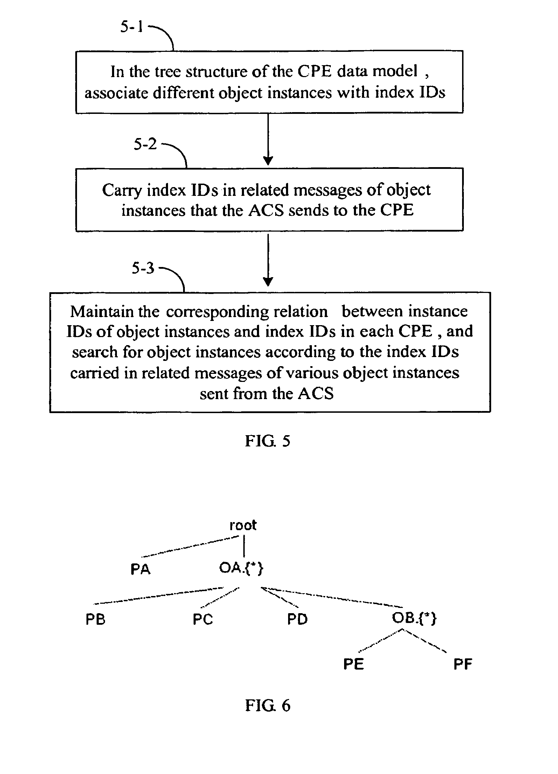

FIG. 5 is a flowchart of the method provided in an embodiment of the present invention, taking the management device being the ACS defined by the DSL Forum and the device being managed being the CPE defined by the DSL Forum as an example. The method includes the following steps:

Step 5-1: In the tree structure of the CPE data model, different object instances are associated with different index IDs.

FIG. 6 shows a structure of a CPE data model in TR-069 provided in an embodiment of the present invention. The CPE data model also adopts a tree structure, which is similar to that is adopted by TR-069 in the conventional art.

The root in FIG. 6 is the root node. All the paths must start from the root node. The root node may have objects, for example, objects OA and OB. The suffix of {*} of an object name indicates that the object may have multiple instances. The root node and objects may have common parameters. For example, parameter PA in FIG. 6 is a parameter in the root node; Parameters PB, PC and PD are parameters in object OA, and parameters PE and PF are parameters in object OB.

In an embodiment of the present invention, the ACS uses an index ID to uniquely identify an object instance when managing the CPE data model shown in FIG. 6, where the index ID is associated with the object instance on a one-to-one basis. In practical applications, the index ID may be defined by the ACS, or customized by a manufacturer, or uniformly specified by a standardization organization.

For example, the index ID of an instance of object OA in FIG. 6 may be set to "IPTVConnection". Then, "IPTVConnection" may uniquely identify an instance of object OA.

Step 5-2: An index ID associated with an object instance is carried in a related message of the object instance that the ACS sends to the CPE.

After using index IDs to differentiate each object instance, the ACS may manage each object instance according to the index IDs, and carry index IDs of various object instances in related messages of various object instances that the ACS sends to the CPE. Managing object instances includes creating and deleting object instances, and accessing, querying and modifying a set of parameters of object instances. The following describes these operations in detail.

In an embodiment of the present invention, a message that the ACS sends to the CPE for creating or deleting an object instance must include an index ID that identifies the object instance uniquely.

The AddObject RPC method of TR-069 may be used by the ACS to create an object instance. This method uses the path name of a set of objects of which new instances need to be created as the parameter. For example, the path name parameter ObjectName may be Top.Group.Object. This parameter does not include an instance ID; that is, the instance ID is allocated by the CPE.

The DeleteObject RPC method of TR-069 may be used by the ACS to delete established instances of an object. This method needs to use the path name of a set of objects of which instances are already established as the parameter. For example, the path name parameter ObjectName may be Top.Group.Object.2.This parameter includes an instance ID.

An embodiment of the present invention extends the ObjectName parameter in the preceding AddObject method and DeleteObject method. Table 1 shows the extended ObjectName parameter.

**Table 1 Description of the extended ObjectName parameter**

| Parameter | Type | Description |
|---|---|---|
| ObjectName | String (256) | Used as the path name of a set of objects of which new instances need to be added (or deleted). For the path name, a dot (.) must be added after the last node of the object level name. |
| | | To use an index ID corresponding to the object instance specified by the ACS, the index ID must be added after the path name of a set of objects to be added (or deleted). The format is as follows: "Path name. {index ID}." |
| Other parameters | | |

For example, when the ACS needs to create an instance associated with an index ID of "IPTVConnection" in the OA shown in FIG. 6, the value of the ObjectName parameter of the AddObject method is as follows:
ObjectName = "root.OA. {IPTVConnection}."

Then, the ACS may send a message relating to the AddObject method that carries the preceding ObjectName parameter to each CPE that needs to configure the preceding instance.

When the ACS needs to delete the preceding instance associated with the index ID of "IPTVConnection", the value of the ObjectName parameter of the DeleteObject method is as follows:
ObjectName = "root.OA. {IPTVConnection}."

Then, the ACS may send a message relating to the DeleteObject method that carries the preceding ObjectName parameter to each CPE that needs to delete the preceding instance.

The ACS may also manage the parameters of the object instance according to the index ID corresponding to the preceding object instance.

For example, to access parameter PB of the instance associated with the index ID of "IPTVConnection" of the preceding object OA, the following path may be used:
root.OA. {IPTVConnection}.PB, where"{}" is used to separate the intermediate node from the index ID, and the separation may be replaced by other modes.

The GetParameterValuse/SetParameterValues RPC method of TR-069 is used to obtain parameter values of one or multiple objects. In the conventional art, the instance ID (instance number) in these RPC methods is represented by a numeric value.

For example, to access the SourceIPAddress parameter with the instance ID of 2 of InternetGatewayDevice.Layer3Forwarding.Forwarding., the following path may be used:
InternetGatewayDevice.Layer3Forwarding.Forwarding.2.SourceIPAddress

In an embodiment of the present invention, if the instance ID is associated with an index ID of "IPTVConnecton", the following path is used:
InternetGatewayDevice.Layer3Forwarding.Forwarding.{IPTVConnection}.SourceIP Address.

Because index IDs are associated with object instances on a one-to-one basis, the correctness of accessing a set of parameters can be guaranteed.

Step 5-3: The corresponding relation between instance IDs of object instances and index IDs in each CPE is maintained, and the object instances are searched for according to the index IDs carried in related messages of various object instances sent from the ACS.

The preceding corresponding relation between the instance IDs of the object instances and the index IDs needs to be stored and managed in each CPE to ensure that each CPE can operate related object instances or a set of parameters properly.

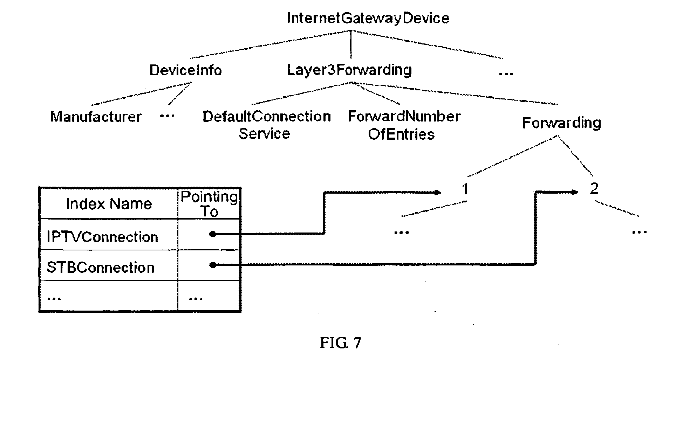

A corresponding relation table between the instance IDs of object instances and index IDs may be maintained in each CPE. Taking the TR069 data model shown in FIG. 2 as an example, the structure of the corresponding relation table is shown in FIG. 7.

As shown in FIG. 7, the corresponding relation table has two columns: one column corresponds to index IDs, and the other column lists instance IDs associated with the index IDs.

The index with an index ID of PTVConnection points to the object instance IntenetGatewayDevice.Layer3Forwarding. Forwarding.1.

The index with an index ID of STBConnection points to the object instance InternetGatewayDevice.Layer3Forwarding.Forwarding.2.

After the CPE receives a message carrying a specified index ID that is associated with the AddObject method from the ACS, the CPE adds an entry to the corresponding relation table after the CPE allocates an instance ID to a new instance, where the entry includes the specified index ID and allocated instance ID.

After the CPE receives a message carrying a specified index ID that is associated with the DeleteObject method from the ACS, the CPE searches the corresponding relation table for an object instance according to the specified index ID, and deletes the object instance and entry where the specified index ID is associated with the deleted instance ID in the corresponding relation table.

After the CPE receives messages carrying a specified index ID that are associated with the GetParameterValues, GetParameterNames and SetParameterValues methods from the ACS, the CPE searches the corresponding relation table for an object instance according to the specified index ID, and operates the object instance according to instructions of the messages.

Although the present invention has been described through several exemplary embodiments, the invention is not limited to such embodiments. It is apparent that those skilled in the art can make various modifications and variations to the invention without departing from the scope of the invention. The present invention is intended to cover such modifications and variations provided that they fall in the scope of protection defined by the following claims.

## Claims

1. A system for managing object instances defined in the Digital Subscriber Line, DSL, Forum, comprising:
a management device, adapted to allocate an index ID to each object instance which needs being managed, wherein the index IDs are associated with the object instances on a one-to-one basis, obtain index ID of an object instance in a device being managed and to carry the index ID in a related message of the object instance associated with the index ID, wherein the related message is sent to different devices being managed; and
the device being managed of the different devices being managed, adapted to store a corresponding relation created by the device being managed of the different devices being managed between an instance ID of the object instance and the index ID, to obtain object instance information associated with the index ID carried in the related message according to the stored corresponding relation after receiving the related message sent from the management device, and to perform related operations on the object instance according to instructions carried in the related message.

2. A method for managing object instances defined in the Digital Subscriber Line, DSL, Forum, comprising:
allocating, by a management device, an index ID to each object instance which needs being managed, wherein the index IDs are associated with the object instances on a one-to-one basis;
obtaining, by the management device, index ID of an object instance in a device being managed; and
applying, by the management device, the index ID in a related message of the object instance associated with the index ID,
sending, by the management device, the related message to different devices being managed;
storing and managing a corresponding relation created by the device being managed of the different devices being managed which is between an instance ID of the object instance and the index ID in the device being managed of the different devices being managed;
after receiving the related message, by the device being managed of the different devices being managed, obtaining object instance information associated with the index ID carried in the related message according to the stored corresponding relation, and
performing, by the device being managed of the different devices being managed, related operations on the object instance according to instructions carried in the related message.

3. The method of claim 2, wherein the related message is a message associated with a method for deleting an object instance to the device being managed of the different devices being managed, wherein the message carries a specific index ID; and
wherein the process of performing, by the device being managed of the different devices being managed, related operations on the object instance according to instructions carried in the related message comprises:
deleting the object instance associated with the specific index ID, and deleting the stored corresponding relation between the specific index ID and the instance ID of the object instance by the device being managed of the different devices being managed.

4. The method of claim 2, wherein the related message is a message associated with a method for obtaining information of one or multiple parameters of a specific object instance or a method for obtaining a name of one or multiple parameters of a specific object instance or a method for setting information of one or multiple parameters of a specific object instance, wherein the message carries a specific index ID.

5. The system of claim 1, wherein the related message is a message associated with a method for deleting a specific object instance to the device being managed of the different devices being managed, wherein the message carries a specific index ID; and
wherein the process of performing, by the device being managed of the different devices being managed, related operations on the object instance according to instructions carried in the related message comprises:
deleting the object instance associated with the specific index ID, and deleting the stored corresponding relation between the specific index ID and the instance ID of the object instance by the device being managed of the different devices being managed.

6. The system of claim 1, wherein the related message is a message associated with a method for obtaining information of one or multiple parameters of a specific object instance or a method for obtaining a name of one or multiple parameters of a specific object instance or a method for setting information of one or multiple parameters of a specific object instance, wherein the message carries a specific index ID.

## Patentansprüche

1. System zur Verwaltung von Objektinstanzen, die im Forum einer digitalen Teilnehmeranschlussleitung (Digital Subscriber Line, DSL) definiert sind, umfassend:
eine Verwaltungseinheit, die geeignet ist, jeder zu verwaltenden Objektinstanz eine Indexkennung zuzuordnen, wobei die Indexkennungen den Objektinstanzen auf einer Eins-zu-Eins-Grundlage zugeordnet werden; eine Indexkennung einer Objektinstanz in einer verwalteten Einheit zu erhalten; und die Indexkennung in einer zugehörigen Nachricht der Objektinstanz mitzuführen, der die Indexkennung zugeordnet ist,
wobei die zugehörige Nachricht an verschiedene verwaltete Einheiten gesendet wird; und
wobei die verwaltete Einheit der verschiedenen verwalteten Einheiten geeignet ist, eine entsprechende Beziehung zu speichern, die von der verwalteten Einheit der verschiedenen verwalteten Einheiten zwischen einer Instanzkennung der Objektinstanz und der Indexkennung erzeugt wird; Informationen der Objektinstanz zu erhalten, die der Indexkennung zugeordnet ist, welche in der zugehörigen Nachricht gemäß der gespeicherten entsprechenden Beziehung nach dem Empfang der von der Verwaltungseinheit gesendeten zugehörigen Nachricht mitgeführt wird, und zugehörige Vorgänge auf der Objektinstanz gemäß Befehlen auszuführen, die in der zugehörigen Nachricht mitgeführt werden.

2. Verfahren zur Verwaltung von Objektinstanzen, die im Forum einer digitalen Teilnehmeranschlussleitung, DSL, definiert sind, umfassend:
Zuordnen einer Indexkennung durch eine Verwaltungseinheit zu jeder Objektinstanz, die verwaltet werden muss, wobei die Indexkennungen den Objektinstanzen auf einer Eins-zu-Eins-Grundlage zugeordnet werden;
Erhalten der Indexkennung einer Objektinstanz durch die Verwaltungseinheit in einer verwalteten Einheit; und
Anwenden der Indexkennung durch die Verwaltungseinheit in einer zugehörigen Nachricht der Objektinstanz, zu der die Indexkennung zugeordnet ist;
Senden der zugehörigen Nachricht durch die Verwaltungseinheit an verschiedene verwaltete Einheiten;
Speichern und Verwalten einer entsprechenden Beziehung, die von der verwalteten Einheit der verschiedenen verwalteten Einheiten erzeugt wird und die zwischen einer Instanzkennung der Objektinstanz und der Indexkennung in der verwalteten Einheit der verschiedenen verwalteten Einheiten besteht;
nach dem Empfangen der zugehörigen Nachricht durch die verwaltete Einheit der verschiedenen verwalteten Einheiten, Erhalten von Informationen der Objektinstanz,
die der Indexkennung zugeordnet ist, die in der zugehörigen Nachricht gemäß der gespeicherten entsprechenden Beziehung mitgeführt wird; und
Ausführen durch die verwaltete Einheit der verschiedenen verwalteten Einheiten zugehöriger Vorgänge auf der Objektinstanz gemäß Befehlen, die in der zugehörigen Nachricht mitgeführt werden.

3. Verfahren nach Anspruch 2, wobei die zugehörige Nachricht eine Nachricht, die einem Verfahren zum Löschen einer Objektinstanz zugeordnet ist, an die verwaltete Einheit der verschiedenen verwalteten Einheiten ist, wobei die Nachricht eine spezifische Indexkennung mitführt; und
wobei der Prozess des Ausführens zugehöriger Vorgänge auf der Objektinstanz durch die verwaltete Einheit der verschiedenen verwalteten Einheiten gemäß Befehlen, die in der zugehörigen Nachricht mitgeführt werden, umfasst:
Löschen der Objektinstanz, die der spezifischen Indexkennung zugeordnet ist, und Löschen der gespeicherten entsprechenden Beziehung zwischen der spezifischen Indexkennung und der Instanzkennung der Objektinstanz durch die verwaltete Einheit der verschiedenen verwalteten Einheiten.

4. Verfahren nach Anspruch 2, wobei die zugehörige Nachricht eine Nachricht ist, die einem Verfahren zum Erhalten von Informationen von einem oder mehreren Parametern einer spezifischen Objektinstanz oder einem Verfahren zum Erhalten eines Namens von einem oder mehreren Parametern einer spezifischen Objektinstanz oder einem Verfahren zum Einstellen von Informationen von einem oder mehreren Parametern einer spezifischen Objektinstanz zugeordnet ist, wobei die Nachricht eine spezifische Indexkennung mitführt.

5. System nach Anspruch 1, wobei die zugehörige Nachricht eine Nachricht, die einem Verfahren zum Löschen einer spezifischen Objektinstanz zugeordnet ist, an die verwaltete Einheit der verschiedenen verwalteten Einheiten ist, wobei die Nachricht eine spezifische Indexkennung mitführt; und
wobei der Prozess des Ausführens zugehöriger Vorgänge auf der Objektinstanz durch die verwaltete Einheit der verschiedenen verwalteten Einheiten gemäß Befehlen, die in der zugehörigen Nachricht mitgeführt werden, umfasst:
Löschen der Objektinstanz, die der spezifischen Indexkennung zugeordnet ist, und Löschen der gespeicherten entsprechenden Beziehung zwischen der spezifischen Indexkennung und der Instanzkennung der Objektinstanz durch die verwaltete Einheit der verschiedenen verwalteten Einheiten.

6. System nach Anspruch 1, wobei die zugehörige Nachricht eine Nachricht ist, die einem Verfahren zum Erhalten von Informationen von einem oder mehreren Parametern einer spezifischen Objektinstanz oder einem Verfahren zum Erhalten eines Namens von einem oder mehreren Parametern einer spezifischen Objektinstanz oder einem Verfahren zum Einstellen von Informationen von einem oder mehreren Parametern einer spezifischen Objektinstanz zugeordnet ist, wobei die Nachricht eine spezifische Indexkennung mitführt.

## Revendications

1. Système de gestion d'instances d'objet définies dans le Forum de Lignes d'Abonnés Numériques, DSL, comprenant :
un dispositif de gestion, adapté pour attribuer un ID d'indice à chaque instance d'objet devant être gérée, les ID d'indices étant associés individuellement aux instances d'objets, obtenir un ID d'indice d'une instance d'objet dans un dispositif géré et
inclure l'ID d'indice dans un message connexe de l'instance d'objet associée à l'ID d'indice, le message connexe étant envoyé à différents dispositifs gérés ; et
le dispositif géré des différents dispositifs gérés étant adapté pour mémoriser une relation correspondante créée par le dispositif géré des différents dispositifs gérés entre un ID d'instance de l'instance d'objet et l'ID d'indice, obtenir l'information d'instance d'objet associée à l'ID d'indice inclus dans le message connexe en fonction de la relation correspondante mémorisée après la réception du message connexe envoyé par le dispositif de gestion, et exécuter des opérations connexes sur l'instance d'objet en fonction d'instructions incluses dans le message connexe.

2. Procédé de gestion d'instances d'objet définies dans le Forum de Lignes d'Abonnés Numériques, DSL, comprenant :
l'attribution, par un dispositif de gestion, d'un ID d'indice à chaque instance d'objet devant être gérée, les ID d'indices étant associés individuellement aux instances d'objets ;
l'obtention, par le dispositif de gestion, d'un ID d'indice d'une instance d'objet dans un dispositif géré ; et
l'application, par le dispositif de gestion, de l'ID d'indice dans un message connexe de l'instance d'objet associée à l'ID d'indice ;
l'envoi, par le dispositif de gestion, du message connexe à différents dispositifs gérés ;
la mémorisation et la gestion d'une relation correspondante créée par le dispositif géré des différents dispositifs gérés qui est établie entre un ID d'instance de l'instance d'objet et l'ID d'indice dans le dispositif géré des différents dispositifs gérés ;
après la réception du message connexe, l'obtention, par le dispositif géré des différents dispositifs gérés, de l'information d'instance d'objet associée à l'ID d'indice inclus dans le message connexe en fonction de la relation correspondante mémorisée, et
l'exécution, par le dispositif géré des différents dispositifs gérés, d'opérations connexes sur l'instance d'objet en fonction d'instructions incluses dans le message connexe.

3. Procédé selon la revendication 2, dans lequel le message connexe est un message associé à un procédé de suppression d'une instance d'objet au dispositif géré des différents dispositifs gérés, le message comportant un ID d'indice spécifié; et
dans lequel le processus d'exécution d'opérations connexes sur l'instance d'objet par le dispositif géré des différents dispositifs gérés en fonction d'instructions incluses dans le message connexe comprend :
la suppression de l'instance d'objet associée à l'ID d'indice spécifié, et la suppression de la relation correspondante mémorisée entre l'ID d'indice spécifié et l'ID d'instance de l'instance d'objet par le dispositif géré des différents dispositifs gérés.

4. Procédé selon la revendication 2, dans lequel le message connexe est un message associé à un procédé d'obtention d'informations d'un ou plusieurs paramètres d'une instance d'objet spécifique ou un procédé d'obtention d'un nom d'un ou plusieurs paramètres d'une instance d'objet spécifique, le message comportant un ID d'indice spécifié.

5. Système selon la revendication 1, dans lequel le message connexe est un message associé à un procédé de suppression d'une instance d'objet spécifique au dispositif géré des différents dispositifs gérés, le message comportant un ID d'indice spécifié ;
et
dans lequel le processus d'exécution, par le dispositif géré des différents dispositifs gérés, d'opérations connexes sur l'instance d'objet en fonction d'instructions incluses dans le message connexe comprend :
la suppression de l'instance d'objet associée à l'ID d'indice spécifié, et la suppression de la relation correspondante mémorisée entre l'ID d'indice spécifié et l'ID d'instance de l'instance d'objet par le dispositif géré des différents dispositifs gérés.

6. Système selon la revendication 1, dans lequel le message connexe est un message associé à un procédé d'obtention d'informations d'un ou plusieurs paramètres d'une instance d'objet spécifique ou un procédé d'obtention d'un nom d'un ou plusieurs paramètres d'une instance d'objet spécifique ou un procédé d'établissement d'informations d'un ou plusieurs paramètres d'une instance d'objet spécifique, le message comportant un ID d'indice spécifié.
